Europäisches Patentamt

European Patent Office

Office européen des brevets

(19)

(11) Publication number: **0 457 459 A2**

(12)

# EUROPEAN PATENT APPLICATION

(21) Application number: **91303926.9**

(22) Date of filing: **01.05.91**

(51) Int. Cl.$^5$: **G11B 17/32, G11B 7/00**

(30) Priority: **18.05.90 US 525895**

(43) Date of publication of application:
**21.11.91 Bulletin 91/47**

(84) Designated Contracting States:
**DE ES FR GB IT NL SE**

(71) Applicant: **IMPERIAL CHEMICAL INDUSTRIES PLC**
**Imperial Chemical House, Millbank**
**London SW1P 3JF (GB)**
Applicant: **BERNOULLI OPTICAL SYSTEMS COMPANY**
**5700 Flatiron Parkway**
**Boulder, Colorado 80301 (US)**

(72) Inventor: **Lopert, Robert Brian**
**5661 Gunbarrel Road**
**Longmont, Colorado 80503 (US)**
Inventor: **Tzur, Israel**
**2795 Darley Avenue**
**Boulder, Colorado 80303 (US)**
Inventor: **Al Ponte, David**
**2065 Spencer Street**
**Boulder, Colorado 80501 (US)**

(74) Representative: **Collingwood, Anthony Robert et al**
**Imperial Chemical Industries PLC Legal Department: Patents P.O. Box 6 Bessemer Road**
**Welwyn Garden City Hertfordshire AL7 1HD (GB)**

(54) Minimising focus error in optical information storage systems.

(57) A cartridge (40) for use with flexible optical disks includes a housing, a surface (42) positioned proximate the disk (44), wherein the disk is stabilized by Bernoulli forces caused by the surface (44) when the disk is rotating and a surface (46) formed on a portion of the surface (44) for providing further stabilization to the disk. The surface (46) is proximate those locations on the disk to which light is directed during information storage and retrieval. A system is also disclosed for use with flexible optical media which includes a chassis (56) on which the media is positioned during use, an actuator (76) positionally fixed in relation to the chassis for effecting lateral movement and a plate (80) attached to the actuator so that the plate can be moved laterally into a position proximate the media. A Bernoulli surface (82), which may be in the form of a bump, is provided on the plate (80) so that when the plate is moved into a position proximate the media, the Bernoulli surface provides a stabilizing effect.

EP 0 457 459 A2

FIG. 2

## Field of the Invention

The present invention relates to optical information storage systems.

## Background of the Invention

The present emphasis in the development of information storage systems is the capability to store more and more information into a so-called "desk top" sized computer memory system. Those "desk top" sized memory systems which incorporate magnetically recorded hard disc media, such as that used in Winchester disc drive type memory systems, currently have the capacity to store upwards of 20 megabytes of magnetically recorded information. So-called "floppy" disc memory systems wherein flexible discs, each having a diameter of either 5.25 inches or 3.50 inches, have a storage capacity of approximately 1 to 2 megabytes of magnetically recorded information.

Optical read/write storage systems have received significant attention due to their potential capacity to store substantially more data, i.e. on the order of 400 to 800 megabytes of information. Unfortunately, problems continue to plague the development and commercial acceptance of such optical systems, namely the time it takes to access such information relative to magnetically recorded information.

In present optical information systems an optical disc is rotated about a central axis. A laser beam is projected onto the surface of the disc by means of a lens, a reflecting mirror or beamsplitter, and a projection lens. The laser beam is modulated by the information stored on the optical disc and the modulated light is detected by a photodetector. Output signals from the photodetector are provided to a processor for producing information signals and tracking signals. The source of the laser beam, the lens, the mirror, the projection lens and the detector are collectively referred to as an optical head assembly. The optical head assembly is typically moved radially across the rotating disc in order to access the information stored on the disc. Since the information to be read or written on an optical disc is contained in narrow tracks, on the order of 1.6 microns, coarse and fine radial movement mechanisms are provided. The fine movement mechanism typically causes movement of the projection lens through the use of relatively massive electromagnets. Consequently, the overall weight of the optical head assembly is such that movement of the assembly is cumbersome and thus relatively slow. In an attempt to resolve the access time problem, efforts to reduce the optical head assembly have been reported. However, since the fine movement mechanism is still an essential component, the weight and size contributed by such a mechanism remains.

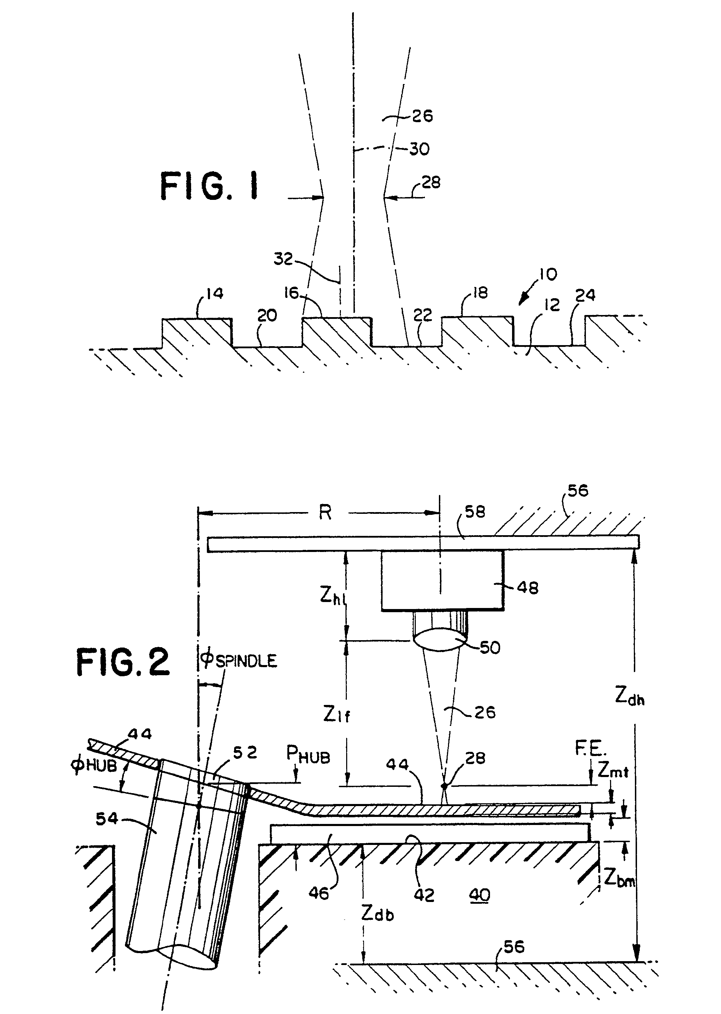

One approach for eliminating the fine movement mechanism, also referred to as the focus mechanism, has been the provision of gross and fine Bernoulli stabilization. Such a system is disclosed in our published UK Patent Application No. 2216710. In that system, a Bernoulli surface provides gross stabilization to the flexible optical media while a coupler element provides fine Bernoulli stabilization in the region immediately proximate the optical head assembly objective lens. In order to eliminate the fine movement mechanism, it is necessary to stabilize the media in relation to the optical head assembly within a fluctuation range of 1 to 10 microns. In order to more fully understand the significance of this range, consider the diagram shown in Figure 1.

In optical information storage systems, data is typically stored on flexible media formed as a rotating disk. Data stored on such disks is contained within a series of tracks, which tracks are typically formed in a spiral or concentric shape. The tracks on a disk can be viewed as roughly analogous to grooves on a phonograph record. In optical and magneto-optical recording, information is stored on a given media by orienting the magnetic field of the media at given points along given tracks. As shown in Figure 1, an enlarged portion of a magneto-optical disk 10 is depicted. Those skilled in the art will recognize that a transparent substrate layer and an encapsulation layer, normally present on disk 10, have not been shown. Disk 10 is shown to have a magneto-optic layer 12, which in turn has a series of concentric or spiral tracks 14, 16 and 18 formed therein. The tracks are depicted as raised having valleys or grooves 20, 22 and 24 therebetween. The reading of information recorded on magneto-optic disk 10 is achieved solely through electrooptical means. A light beam 26 is focused by a lens, not shown, onto track 16. As depicted in Figure 1, focal point 28 of light beam 26 is approximately 1 micron in diameter. In the ideal situation, focal point 28 is positioned exactly on the upper surface of track 16, with beam centre line 30, precisely aligned with track centre line 32 of track 16. In operation, disk 10 will fluctuate such that focus point 28 will move closer to and farther from the surfaces of the tracks in which information is stored. If the fluctuation of disk 10 exceeds a distance of 10 microns, the width of beam 26 will extend over more than one track, providing inaccurate light modulation. The distance from the focus point 28 to the surface of any given track is referred to as the focus error (FE).

The system disclosed in UK Patent Application No 2216710, in maintaining the focus error within the preferred 10 micron range, required attracting the media to within a very small distance from the fine Bernoulli stabilization surface. In certain situations, the closeness of the media to the fine stabilization surface exhibited excessive wear. As will be appreciated, such wear will cause reflection phase shifts. If the wear is significant, i.e. a scratch, such reflection phase shifts can reach between 180° and 360°. Con-

3

quently, a need exists to stabilize flexible optical media, i.e. to reduce focus error, while simultaneously locating the optical head a sufficient distance from the media to eliminate wear and further maintain the overall weight of the optical head assembly at a minimum.

## Summary of the Invention

Stated broadly, the present invention is concerned with a cartridge for use with flexible optical disks which includes a housing, a first surface positioned proximate the disk, wherein the disk is stabilized by Bernoulli forces caused by the first surface when the disk is rotating and a second surface formed on a portion of the first surface, wherein the second surface provides further stabilization to the disk and wherein the second surface is proximate those locations on the disk to which light is directed during information storage and retrieval either on the top side or bottom side of the disk. In one embodiment, the second surface is a bump. The invention is also concerned with a system for use with flexible optical media which includes a chassis on which the media is positioned during use, an actuator positionally fixed in relation to the chassis for effecting lateral movement and a plate attached to the actuator so that the plate can be moved laterally into a position proximate the media, wherein a Bernoulli surface is formed on the plate so that when the plate is moved into a position proximate the media, the Bernoulli surface provides a stabilizing effect. In one embodiment, a bump is formed on the plate to provide further stabilization. In another embodiment an optical head is provided which is capable of movement along a path parallel to the media during use. By utilizing such a system, it is possible to maintain an optical head assembly at a sufficient distance from the optical media to eliminate wear and yet keep the weight of the optical head at a minimum. Weight is minimized in that such a system requires a focus actuator for the optical head which is only required to provide movement within plus or minus 200 microns or less.

These and other objects and advantages of the invention will become more apparent from the appended claims, and also the following detailed description when taken in conjunction with the following drawings.

## Brief Description of the Drawings

Figure 1 is an enlarged plan view of optical media having light focused thereon;

Figure 2 is a partial section view of an optical information storage system incorporating the present invention;

Figure 3 is a section view of an alternative embodiment of the present invention;

Figure 4 is a section view along the line 4-4 of Figure 3;

Figure 5 is a section view of the drive plate/cartridge interface of the embodiment shown in Figure 4; and

Figure 6 is a block diagram of the servo system utilized in conjunction with the present invention.

## Detailed Description of The Preferred Embodiment

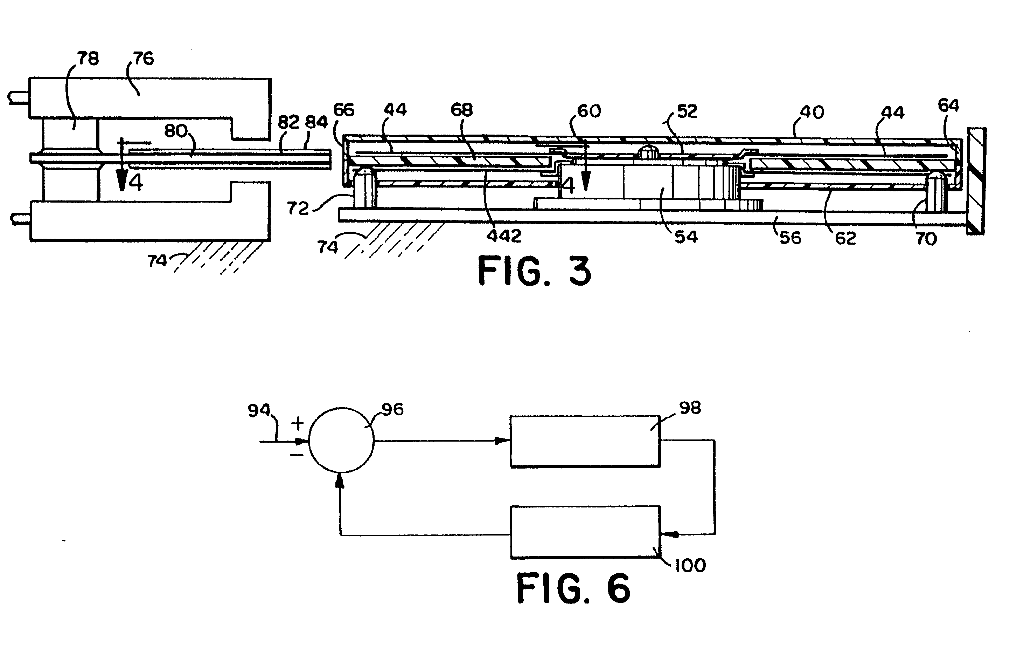

A new and novel cartridge for use with flexible optical disks is depicted in part in Figure 2 and is generally designated 40. The details of cartridge 40 are more particularly shown in Figure 3. However, for purposes of understanding the benefits of the present invention, consider first the interrelationship of those components depicted in Figure 2. Cartridge 40 includes a first surface 42 which is positioned proximate flexible disk 44. Surface 42 is a Bernoulli surface and as such, generates stabilizing forces which act upon disk 44 when it is rotating above the surface 42. A second surface 46 is formed on a portion of surface 42. In the preferred embodiment, second surface 46 is in the form of a bump which extends radially across surface 42 relative to the disk. Bump 46 provides further stabilization to flexible disk 44. As is shown in Figure 2, bump 46 is located proximate those portions of flexible disk 44 to which light is directed from optical head 48 through lens 50. In other words, bump 46 is located proximate those locations on flexible disk 44 to which light is directed during information storage and/or retrieval. It will also be noted that surface 42 defines an area which contains bump 46. Thus, as flexible disk 44 is rotated, it is stabilized by the Bernoulli forces created by surface 42 and further stabilized by the forces caused by bump 46.

Flexible disk 44 is attached by any known manner to hub 52 which in turn is shown to be engaged by spindle 54. As will be appreciated, as spindle 54 is rotated, flexible disk 44 will spin. It is also shown in Figure 2 that cartridge 40 is positioned or rests during use on deck or chassis 56. One of the primary benefits of the methods and apparatus of the present invention is the minimization of fluctuation of disk 44, and thus the minimization of the focus error (FE) of light beam 26. It will be appreciated from Figure 2 that the focus error is determined from several fixed factors and one relatively variable factor. The focus error can be thought of in terms of the following formula:

$$FE = (Z_{dh} - Z_{hl} - Z_{lf}) - (Z_{db} + Z_{bm} + Z_{ml})$$

where $Z_{dh}$ is equal to the distance from chassis 56 to the top of optical head 48;

$Z_{hl}$ is equal to the distance from the top of optical head 48 to lens 50;

$Z_{lf}$ is equal to the distance from lens 50 to focal point 28;

$Z_{db}$ is equal to the distance from chassis 56 to surface 42;

$Z_{bm}$ is equal to the distance from surface 42 to

media 44; and

$Z_{mt}$ is equal to the thickness of media 44.

Of all the above listed variables, only $Z_{bm}$ will vary to any significant degree. $Z_{bm}$ can also be thought of as the flying height of media 44 over surface 42. The distance $Z_{bm}$ is a function of a number of factors, including the distance (R) of optical head 48 from the centre line of spindle 54, the penetration height ($P_{hub}$) of spindle 54 into cartridge 40, the angle $\Phi_{hub}$ which is the angle of the hub relative to a line perpendicular to the centre line of spindle 54, $\Phi_{spindle}$ which is the angle of spindle 54 relative to a line perpendicular to chassis 56, compositional properties of media 44 and the shape of the secondary stabilization surface 46. The purpose of the present invention is to maintain as constant as possible the parameter $Z_{bm}$.

It is known to use a focusing actuator for moving lens 50 toward and away from media 44 so as to minimize the focus error (FE) during operation. In typical prior systems, the focus actuator would be included in head assembly 48 and would be capable of moving lens 50 from the position shown in Figure 2 to an extended or retracted position of plus or minus 500 microns. It has been found that by utilizing the principles of the present invention, such a focus actuator can be replaced by a focus actuator which need only move lens 50 to extended or retracted positions of plus or minus 200 microns or less. Since the overall movement of lens 50 is significantly smaller, the focusing actuator can be made significantly lighter, thus decreasing the overall weight of the optical head assembly.

The focus actuators are generally of the voice coil design, and consist of a lens attached to a flexure assembly that is driven vertically by two attached coils in a magnetic circuit which includes two small high performance rare-earth magnets. The flexure assembly attaches to the head-assembly structure, and allows the lens to change vertical position as a function of coil current and polarity. A cantilevered flexure suspension integrates efficiently into the optics head architecture, minimizing the rotational inertia of the head assembly about its pivot point.

One embodiment of minimizing the distances $Z_{bm}$ is the combination of surface 42 and bump 46. In an alternative embodiment, the distance $Z_{bm}$ is minimized by inclining track 58 to be substantially parallel to the surface of media 44. During operation, information is accessed from disk 44 by moving optical head 48 along track 58. Although not completely shown, it should be understood that track 58 is mechanically connected to deck or chassis 56 by any suitable structure.

Referring now to Figure 3, an alternative embodiment of cartridge 40 is depicted. Cartridge 40 is shown therein to include top wall 60, bottom wall 62 and sidewalls 64 and 66. In the embodiment shown, two flexible optical disks 44 and 44A are positioned on either side of central plate 68. A Bernoulli surface is formed on each side of plate 68, i.e. facing media 44 and 44A. A plurality of openings are provided in bottom wall 62, such that plate 68 can be fixed in relation to chassis 56 in that a number of posts 70 and 72, attached by any suitable means to deck 56, extend through bottom wall 62 and contact plate 68. In this way, the distance $Z_{db}$ is maintained relatively constant, and further will be relatively consistent from cartridge to cartridge. Chassis 56 is attached by any suitable means to the base or frame 74 of the information storage system. An actuator 76 is positionally fixed in relation to chassis 56 by its attachment to base or frame 74. The actuator is capable of laterally moving sled 78 when enabled.

A plate 80 is attached to sled 78 so that when actuator 76 is enabled, plate 80 is moved laterally in relation to chassis 56 into a position proximate media 44 and 44A. A Bernoulli surface 82 is formed on plate 80 so that when plate 80 is moved into a position proximate media 44, Bernoulli surface 82 provides a stabilizing effect. A second surface 84 is formed on a portion of plate 80 for providing further stabilization to media 44 at those locations to which light is directed during information storage or retrieval. In the preferred embodiment, second surface 84 comprises a bump which extends radially across surface 82 relative to disk 44. It will be noted from the embodiment shown in Figure 3 that surfaces 82 and 84 are formed on both sides of plate 80 such that Bernoulli stabilization is provided to media 44A.

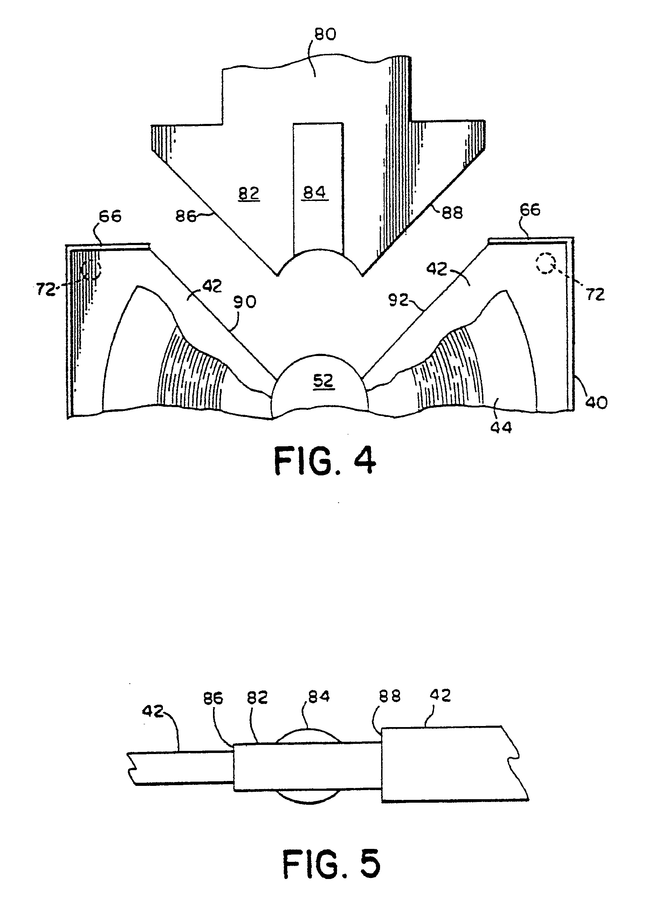

As shown in Figure 4, cartridge 40 is provided with an opening in sidewall 66 through which plate 80 passes when actuator 76 is enabled. Plate 80 is shown to have first and second sides 86 and 88, respectively. When plate 80 has been moved laterally, sides 86 and 88 contact sides 90 and 92 of cartridge 40.

In an especially preferred embodiment shown in Figure 5, at the interface between plate 80 and Bernoulli surface 42, surface 42 is below surface 82 alongside 86 and above surface 82 alongside 88. It has been found with this arrangement, that the precise matching of surfaces, i.e. the precise matching of surface 82 with surface 42, can be dispensed with as well as at the same time providing a relatively smooth, i.e. minimum wear, transition for media 44.

Referring now to Figure 6, there is shown a typical servo system for use in focusing an optical information storage system in accordance with the present invention. A focus error signal is provided to the input of summer device 96. The output of summer 96 is a modified focus error signal which is provided to compensator 98. The output of compensator 98 is provided to the actuator circuit 100 used in conjunction with actuator 76. The output of actuator 100 is representative of the position of sled 78 which is fed back into summer 96. In such a system, if incorporated in prior devices, a system band width of approximately 2000 hertz was required. Such a servo system utilized in conjunction with the present invention, only requires an actuator 100 having a band width of approximately 1000 hertz.

While the invention has been described and illustrated with reference to specific embodiments, those skilled in the art will recognize that modification and variations may be made without departing from the principles of the invention as described hereinabove and set forth in the following claims.

## Claims

1. A cartridge for use with flexible optical disks, comprising:

   a housing;

   a first surface positioned proximate said flexible disk, said flexible disk being stabilized by Bernoulli forces caused by said first surface when said flexible disk is rotating; and

   a second surface formed on a portion of said first surface, wherein said second surface provides further stabilization to said flexible disk and wherein said second surface is proximate those locations on said flexible disk to which light is directed during information storage and retrieval.

2. A cartridge as claimed in Claim 1, wherein said second surface comprises a bump formed in said first surface.

3. A cartridge as claimed in Claim 2, wherein said bump extends radially across said first surface relative to said disk.

4. A cartridge as claimed in any one of Claims 1 to 3, wherein said first surface defines an area and wherein said second surface is contained within said area.

5. An optical read/write storage system for use with flexible optical media, comprising:

   a chassis on which said media is positioned during use;

   an actuator positionally fixed in relation to said chassis for effecting lateral movement in relation to said chassis; and

   a plate attached to said actuator so that when said actuator is enabled said plate moves laterally in relation to said chassis into a position proximate said media, wherein a Bernoulli surface is formed on said plate so that when said plate is moved into a position proximate said media, said Bernoulli surface provides a stabilizing effect to said media during use.

6. A system as claimed in Claim 5, wherein during use said media defines a read/write plane, said system further comprising an optical head capable of movement along a path across said media wherein said path is substantially parallel to said plane.

7. A system as claimed in Claim 5 or 6, further comprising a second surface formed on a portion of said plate, wherein said second surface provides further stabilization to said media and wherein said second surface is proximate those locations on said media to which light is directed during information storage and retrieval.

8. A system as claimed in Claim 7, wherein said second surface comprises a bump.

9. A system as claimed in Claim 8, wherein said bump extends radially across said Bernoulli surface relative to said disk.

10. A system as claimed in any one of Claims 7 to 9, wherein said Bernoulli surface defines an area and wherein said second surface is contained within said area.

11. A system of as claimed in any one of Claims 5 to 10, wherein said media is contained in a cartridge, said cartridge having an opening through which said plate passes when said plate moves laterally in relation to said chassis into a position proximate said media.

12. A system as claimed in Claim 12, wherein said cartridge has an opening through which said optical head accesses said media during read/write operations.

13. A system as claimed in Claim 11 or 12, wherein said plate has first and second sides and wherein said cartridge further comprises a second Bernoulli surface which contacts said plate along said first and second sides when said plate is moved laterally, wherein said second Bernoulli surface is below the surface of said plate along said first side and said second Bernoulli surface is above the surface of said plate along said second side.

FIG. 1

FIG. 2

FIG. 3

FIG. 6

80

82    84

86    88

66    66

72    42    42    72

90    92

52

44    40

# FIG. 4

42    86  82  84  88  42

# FIG. 5